**Europäisches Patentamt**

**European Patent Office**

**Office européen des brevets**

(19)

(11) Veröffentlichungsnummer: **0 215 329**
**B1**

(12) # EUROPÄISCHE PATENTSCHRIFT

(45) Veröffentlichungstag der Patentschrift:
**28.12.88**

(51) Int. Cl.⁴: **B 60 D 5/00,** B 61 D 17/22

(21) Anmeldenummer: **86111584.8**

(22) Anmeldetag: **21.08.86**

(54) **Spurfugenabdeckung bei Gelenkfahrzeugen.**

(30) Priorität: **22.08.85 DE 3530072**

(43) Veröffentlichungstag der Anmeldung:
**25.03.87 Patentblatt 87/13**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**EP-A- 0 180 062**
**FR-A- 2 287 354**

**VERKEHR UND TECHNIK, Heft 9, September 1977, Seite 338, Bielefeld; "Konstruktiver Aufbau der Koppelung"**

(73) Patentinhaber: **HÜBNER Gummi- und Kunststoff GmbH, Agathofstrasse 15, D-3500 Kassel-Bettenhausen 1 (DE)**

(72) Erfinder: **Koch, Robert, Schlesierstrasse 2, D-3437 Bad Sooden-Allendorf (DE)**

(74) Vertreter: **Walter, Helmut, Aublngerstrasse 81, D-8000 München 60 (DE)**

## Beschreibung

Bei Gelenkfahrzeugen, insbesondere Gelenkomnibussen, sind Motorwagen und Nachläufer bzw. zwei Glieder des Gelenkfahrzeuges so miteinander gelenkig gekoppelt, dass sich zwischen ihnen ein Drehteller befindet, der während der Fahrt zusätzliche Stehplätze ergibt und den Passagieren ein Überwechseln von einem zum anderen Fahrzeugglied ermöglicht. Der so geschaffene Übergang, also insbesondere der Drehteller, ist von einem Faltenbalg umgeben. Zwischen den Faltenbalgseitenwänden und dem Rand des Drehtellers besteht eine sogenannte Spurfuge, d.h. ein Zwischenraum zwischen den Balgseitenwänden und dem Drehtellerrand, der ein Drehen des Drehtellers im Balg ermöglicht. Um Unfälle durch die Spurfuge zu vermeiden, ist es üblich, diese abzudekken.

Die sogenannte seitliche, horizontale Abdeckung hat den Nachteil, dass sie an einer inneren Barriere, die wagenseitig zu erreichen ist, aufgehangen werden muss und, bedingt durch den Bewegungsablauf des Busses, gewisse Spalten nicht völlig abdichten kann. Die Bodenabdeckung bietet zwar den Vorteil, auf diese Barriere verzichten zu können, ist jedoch nur am Oberteil befestigt und liegt lose auf dem Drehteller auf, so dass es teilweise zu Zerstörungen oder sicherheitstechnischen Bedenken kommen kann. Die seitliche, vertikale Abdeckung von Oberkante Faltenbalg bis Drehteller schliesst zwar die beiden vorgenannten Mängel aus und ermöglicht die Durchführung von Kabeln und Leitungen im abgedeckten Bereich, wird aber von manchen Betreibern nicht positiv bewertet, da der Durchgang des Gelenkfahrzeuges optisch eingeschränkt wird.

Aufgabe der Erfindung ist es, eine neue Abdeckung vorzuschlagen, die sich durch Einfachheit, Betriebssicherheit und geringe Verschleissanfälligkeit auszeichnet.

Zur Lösung der Aufgabe wird erfindungsgemäss vorgeschlagen, dass durch eine podestartige Ausgestaltung der Spurfugenabdeckung zu beiden Seiten der Fahrzeuglängsmitte aus dem Faltenbalgmaterial entsprechendem und dem Faltenbalg entsprechend gefaltetem Material, wobei die Falten der Podeste wie die Falten des Balges von oben nach unten verlaufen und an den oberen Enden mit einer Profilleiste am Faltenbalg anliegend Falte für Falte an der jeweils entsprechenden Falte des Faltenbalges befestigt sind, während ihre unteren Enden mit geringem Abstand über dem Drehteller liegen und mit ihren zugeordneten Konsolen oder Tragarmen wiederum Falte für Falte an der jeweils entsprechenden Falte des Faltenbalges befestigt sind.

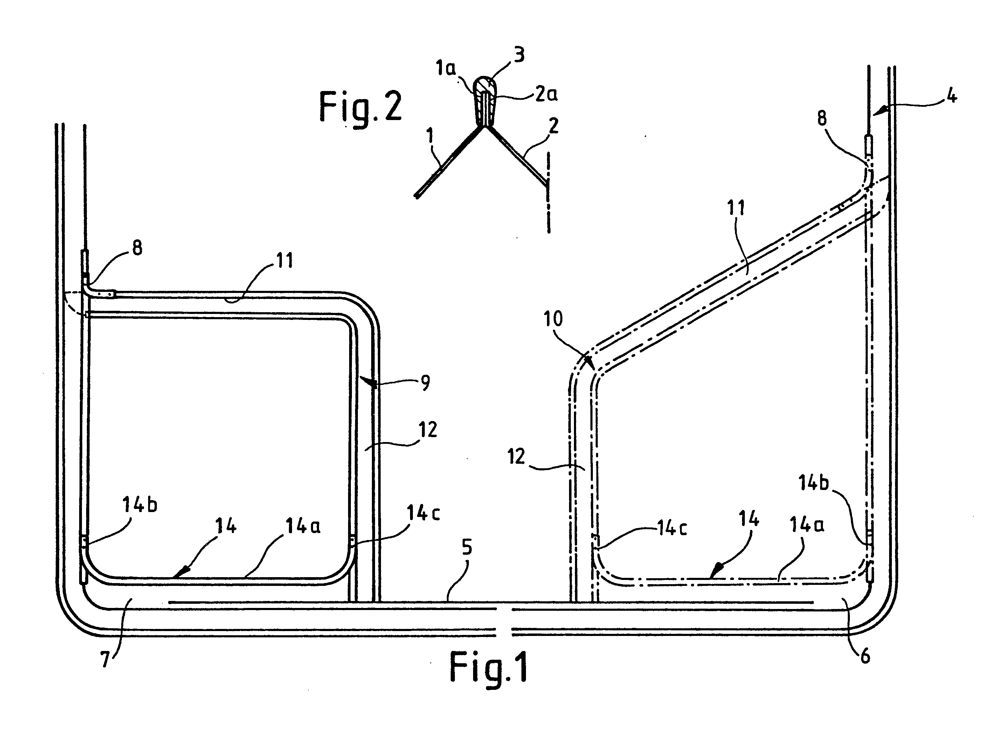

Die Erfindung und weitere Einzelheiten derselben werden nachfolgend anhand der Zeichnung näher erläutert. Soweit Merkmale die Erfindung in besonders zweckmässiger Weise ausgestalten, sind sie Gegenstand der Unteransprüche. In der Zeichnung stellt Fig. 1 einen Querschnitt durch den unteren Bereich eines Faltenbalges dar, wobei dessen rechte und linke Seite zwei verschiedene Versionen der Erfindung darstellen und zur Verdeutlichung dieses Sachverhaltes die Anordnung in der linken Hälfte der Zeichnung in ausgezogenen Linien dargestellt ist, während in der rechten Hälfte der Fig. 1 der erfindungsgemäss ausgestaltete Teil des Balges in strichpunktierten Linien dargestellt ist. Fig. 2 stellt eine Einzelheit der Anordnung gemäss Fig. 1 in grösserer Darstellung zum besseren Verständnis der Anordnung dar.

Der gesamte Faltenbalg besteht aus einer Anzahl einzelner Bahnen, von denen in Fig. 2 zwei Bahnen 1 und 2 dargestellt sind. Die Bahnen sind in den einander zugeordneten Kantenbereichen 1a und 2a miteinander verklebt und/oder vernäht. Zur Sicherung dieser Verbindung ist auf die Kantenbereiche 1a, 2a ein Klemmprofil 3 vorzugsweise aus Aluminium aufgeschoben. Der so aufgebaute Faltenbalg ist mit in Umfangsrichtung verlaufenden Falten zwischen zwei Gliedern eines Gelenkfahrzeuges angeordnet, um einen wettergeschützten Tunnel zu ergeben, der jedoch so nachgiebig ist, dass er die notwendigen Relativbewegungen zwischen den beiden Fahrzeuggliedern nicht behindert. Personen wird das Überwechseln von einem zum anderen Fahrzeugglied durch den von dem Faltenbalg 4 umgrenzten, ringsum geschlossenen, Tunnel mittels eines Drehtellers 5 ermöglicht, der oberhalb des Faltenbalgbodens liegend in bekannter und zweckentsprechender Weise eingebaut ist. Die Spurfugen 6, 7 zwischen dem Rand des Drehtellers 5 und den Faltenbalgseitenwänden sind insbesondere aus Gründen der Sicherheit abzudecken und erfindungsgemäss geschieht das wie folgt.

Profile 8, die den Profilen 3 entsprechen, jedoch eine entsprechend grössere Spaltweite haben, sind im unteren Bereich der Faltenbalgseitenwände auf die Profile 3 aufgesteckt und mit diesen verbunden, beispielsweise verschraubt oder vernietet. Die Profile sind abgewinkelt und die abgewinkelten, zumindest etwa horizontal verlaufenden, Profilabschnitte halten Profile einer Faltenbalgstruktur 9 bzw. 10, die entsprechend dem eigentlichen Faltenbalg 4 aufgebaut ist, so dass Fig. 2 auch ein Schnitt durch die Faltenbalgstruktur 9 bzw. 10 sein könnte. Die Faltenbalgstruktur 9 bzw. 10 ist so konstruiert, dass an dem zumindest etwa horizontalen Deckel 11 ein nach unten gerichtetes vertikales Wandteil 12 anschliesst, das mit seinem unteren Ende dicht über dem Drehteller 5 endet, so dass zwischen dem unteren Ende der Wandteile 12 und der Oberseite des Drehtellers 5 ein nur schmaler Spalt 13 besteht, der nur so gross bemessen ist, dass sich Drehteller 5 und unteres Ende der Faltenbalgstruktur 9 bzw. 10 relativ zueinander bewegen können. Wesentlich ist nun, dass die Balgstruktur 9 bzw. 10 am unteren Ende ebenfalls an der jeweiligen Faltenbalgseitenwand abgestützt ist. Hierzu ist je eine Profilleiste 14, die im Querschnitt den Profilen 8 entspricht, zu einem U mit relativ langem, horizontalen Steg 14a und zwei relativ kurzen, vertikalen Stegen 14b und 14c gebogen und auf je einer Profilleiste der Balgstruktur 9 bzw. 10 und der Balgseitenwand aufgesteckt und dort durch Schrauben oder Nieten befestigt. Auf diese Weise sind die Spurfugen 6 bzw. 7 zuverlässig abgedeckt, der Durchgang über den Drehteller ist nur unwesentlich eingeschränkt, in der Höhe ist das lichte Mass zwischen den Balgseitenwänden nur auf einem geringen Teil eingeschränkt und der Faltenbalgcharakter ist durchgehend erhalten.

Die linke Lösung ist so ausgebildet, dass es Steifigkeit der Faltenbalgstruktur und ebene Deckfläche gestatten, die Deckflächen der Faltenbalgstruktur in begrenztem Masse als Ablage zu nutzen. Die rechte Lösung vermeidet es mit der schrägen Deckfläche, dass die Deckfläche als Ablage absichtswidrig benutzt wird.

Bevorzugt ist jede Falte der Faltenbalgstrukturen 9, 10 an je einer Falte des Faltenbalges 4 in der erfindungsgemässen Weise abgestützt. Bei geringeren Anforderungen ist es möglich, abgestützte und nicht abgestützte Falten der Faltenbalgstrukturen 9, 10 in zweckentsprechender Sequenz aufeinanderfolgen zu lassen. Die Strukturen sind auf jeden Fall so zuverlässig gelagert, dass der Spalt zwischen der jeweiligen Struktur und dem Drehteller extrem schmal sein kann, die Unfallgefahr also sehr klein ist; trotzdem besteht nicht die Gefahr des Verschleisses durch Streifen der Strukturen mit ihren unteren Kanten auf dem Drehteller.

Die vertikalen Wände 12 der podestartigen Spurabdeckung 9, 10 können parallel zu den Faltenbalgseitenwänden verlaufen, so dass ein gerader Durchgang gegeben ist, die Wände können zu dem Rand des Drehtellers 5 parallele Zylinderabschnitte bilden, so dass der Durchgang unterschiedliche, veränderliche Weite hat.

## Patentansprüche

1. Vorrichtung zum Abdecken der Spurfuge zwischen dem Drehteller und dem Faltenbalg von Gelenkfahrzeugen, wobei der Faltenbalg mit seinen Seitenwänden zumindest bis in die Horizontalebene des Drehtellers reicht, gekennzeichnet durch eine podestartige Ausgestaltung der Spurfugenabdeckung (9, 10) zu beiden Seiten der Fahrzeuglängsmitte aus dem Faltenbalgmaterial entsprechendem und dem Faltenbalg entsprechend gefaltetem Material, wobei die Falten der Podeste wie die Falten des Balges von oben nach unten verlaufen und an den oberen Enden mit einer Profilleiste (8) am Faltenbalg (4) anliegend Falte für Falte an der jeweils entsprechenden Falte des Faltenbalges befestigt sind, während ihre unteren Enden mit geringem Abstand über dem Drehteller (5) liegen und mit ihnen zugeordneten Konsolen oder Tragarmen (14) wiederum Falte für Falte an der jeweils entsprechenden Falte des Faltenbalges befestigt sind.

2. Vorrichtung nach Anspruch 1, dadurch gekennzeichnet, dass die Oberseiten (11) der Podeste (9) parallel zum Drehteller (4) horizontal verlaufen.

3. Vorrichtung nach Anspruch 1, dadurch gekennzeichnet, dass die Oberseite (11) der Podeste (10) mit der zugehörigen Balgseitenwand einen Winkel einschliesst, der kleiner als 90° ist.

4. Vorrichtung nach einem der Ansprüche 1 bis 3, dadurch gekennzeichnet, dass jede Falte der Podeste (9, 10) an beiden Enden an der zugehörigen Falte des Faltenbalges (4) gehalten ist.

5. Vorrichtung nach einem der Ansprüche 1 bis 4, dadurch gekennzeichnet, dass nur einige, ausgewählte Falten der Podeste (9, 10) an beiden Enden an der zugehörigen Falte des Faltenbalges (4) gehalten sind.

6. Vorrichtung nach einem der Ansprüche 1 bis 5, dadurch gekennzeichnet, dass die vertikalen Wände (12) der Podeste (9, 10) parallel zu den Faltenbalgseitenwänden verlaufen.

7. Vorrichtung nach einem der Ansprüche 1 bis 5, dadurch gekennzeichnet, dass die vertikalen Wände (12) der Podeste (9, 10) parallel zu dem Rand der Drehscheibe (5) verlaufen.

## Claims

1. A device for covering the track gap between the turntable and bellows of articulated vehicles, the bellows side walls extending at least into the horizontal plane of the turntable, characterised by a pedestal-like construction of the gap covering (9, 10) on both sides of the longitudinal centre of the vehicle, the pedestal-like construction being made of material corresponding to the material of the bellows and being folded correspondingly thereto, the folds of the pedestals and the folds of the bellows extending downwardly and being secured at the top ends by means of a profiled strip (8) in fold-for-fold engagement with the bellows (4) on the corresponding fold thereof, while their bottom ends are disposed a short distance above the turntable (5) and are secured by means of associated brackets or support arms (14), again in fold-for-fold arrangement, to the corresponding fold of the bellows.

2. A device according to Claim 1, characterised in that the tops (11) of the pedestals (9) extend horizontally and parallel to the turntable (4).

3. A device according to Claim 1, characterised in that the top (11) of the pedestals (10) includes an angle of less than 90° with the associated bellows side wall.

4. A device according to any of claims 1 to 3, characterised in that each of the pedestals (9, 10) is retained at both ends on the associated fold of the bellows (4).

5. A device according to any of claims 1 to 4, characterised in that only some selected folds of the pedestals (9, 10) are retained at both ends on the associated fold of the bellows (4).

6. A device according to any of claims 1 to 5, characterised in that the vertical walls (12) of the pedestals (9, 10) extend parallel to the bellows side walls.

7. A device according to any of claims 1 to 5, characterised in that the vertical walls (12) of the pedestals (9, 10) extend parallel to the edge of the turntable disc (5).

## Revendications

1. Dispositif pour la couverture du joint entre le plateau tournant et le soufflet de véhicules articulé, sur lequel le soufflet s'étend par ses parois latérales au moins jusqu'au plan horizontal du plateau tournant, caractérisé par une conformation analogue à un palier de la couverture du joint (9, 10) des deux côtés de l'axe du véhicule dans le sens longitudinal, réalisée dans une matière correspondant à la matière du soufflet et pourvue de plis correspondant à ceux de soufflet, sur laquelle les plis du palier s'étendent comme les plis du soufflet du haut vers le bas et sont fixés au moyen d'une tringle profilée (8) sur le soufflet (4) en s'appuyant pli par pli contre les plis correspondants du soufflet, tandis que leurs extrémités inférieures se trouvent au-dessus du plateau tournant (5), à une faible distance de celui-ci et sont de même fixées pli par pli contre les plis correspondants du soufflet au moyen des consoles et des bras (14) de soutien qui leur sont adjoints.

2. Dispositif selon la revendication 1, caractérisé en ce que les faces supérieures (11) des paliers (9) s'étendent horizontalement et parallèlement au plateau tournant (4).

3. Dispositif selon la revendication 1, caractérisé en ce que la face supérieure (11) des paliers (10) forme avec la paroi du soufflet correspondant un angle inférieur à 90°.

4. Dispositif selon l'une des revendications 1 à 3, caractérisé en ce que chacun des plis des paliers (9, 10) est maintenu à ses deux extrémités contre le pli correspondant du soufflet (4).

5. Dispositif selon l'une des revendications 1 à 4, caractérisé en ce que seuls certains plis sélectionnés des paliers (9, 10) sont maintenus à leurs deux extrémités contre les plis correspondant du soufflet.

6. Dispositif selon l'une des revendications 1 à 5, caractérisé en ce que les parois verticales (12) des paliers (9, 10) sétendent parallèlement aux parois verticales du soufflet.

7. Dispositif selon l'une des revendications 1 à 5, caractérisé en ce que les parois verticales (12) des paliers (9, 10) s'étendent, parallèlement au bord du disque tournant (5).

EP 0 215 329 B1

Fig.2

Fig.1